# EUROPEAN PATENT SPECIFICATION

(11) **EP 4 332 387 B1**
(45) Date of publication and mention of the grant of the patent: **09.07.2025**
(21) Application number: 23194297.0
(22) Date of filing: 30.08.2023
(51) Int. Cl.: F16B 5/02, F16B 29/00, F16D 1/094

(54) **COUPLING DEVICE WITH MINIMIZED COEFFICIENT OF FRICTION**
KUPPLUNGSVORRICHTUNG MIT MINIMIERTEM REIBUNGSKOEFFIZIENT
DISPOSITIF D'ACCOUPLEMENT À COEFFICIENT DE FROTTEMENT RÉDUIT AU MINIMUM

(30) Priority: 30.08.2022 US 202263373881 P
(43) Date of publication of application: 06.03.2024
(73) Proprietor: Fenner Inc., Harrisburg, PA 17101 (US)
(72) Inventor: Tucker, Bradley William, Pine Grove, PA, 17963 (US); Mosser, Eric S., Palmyra, PA, 17078 (US)
(74) Representative: Meissner Bolte Partnerschaft mbB

(56) References cited:
- WO-A1-2021/230794
- DE-A1- 2 944 756
- JP-A- 2004 286 155
- US-A- 4 345 851
- US-B2- 9 618 051

## Description

### CROSS-REFERENCE TO RELATED APPLICATION

This application claims the benefit of U.S. Provisional Patent Application Serial No. 63/373,881, filed August 30, 2022.

### FIELD

The present disclosure relates to a coupling device, and more particularly to a coupling device with minimized coefficient of friction. The document WO 2021/230794 A1 shows a prior art coupling device.

### BACKGROUND

The use of devices for mounting components is well-known. Keyless locking devices (KLDs) are used for mounting together two components, such as a shaft and a machine element. KLDs are frequently used in applications such as: V-belt and conveyor pulleys; sprockets, sheaves, gears, levers, flywheels, agitator shafts, hydraulic clutches, brakes, flange couplings, as well as other applications. KLDs offer many advantages over other devices including increased loading capacity and minimal loss in torque when compared to keyed locking devices. There are a variety of KLDs including single-nut devices as well as multi-screw devices. Generally, keyless locking devices operate using a tapered surface, or wedge principle. Some devices operate via the application of an axial force to engage rings with reciprocal tapers resulting in a wedge action creating a radial force on the tapered rings. A first ring contracts to squeeze the shaft, while the other expands into the bore of the component, or machine element. Alternatively, to eliminate tensile stresses on the mounted component a keyless locking device may be configured to apply an axial force to engage sets of rings with reciprocal tapers; the inner ring creates a radial force on the shaft and the outer tapered rings are drawn together to generate a radial force clamping the component.

One of the difficulties faced with these and related devices is frictional loss between the tapered surfaces. Currently, many devices have tapered surfaces comprising a steel on steel surface. An exemplary steel on steel surface may have a coefficient of friction (CoF) rating of approximately 0.10.

Accordingly, it is an object of the present invention to provide a coupling device with a reduced CoF. By minimizing the CoF between the tapered surfaces less installation torque is required to achieve the same radial force, or alternatively, an increase in radial forces can be achieved using the same installation torque.

### BRIEF SUMMARY

In concordance and agreement with the presently described subject matter, a coupling device with an improved coefficient of friction, has been newly designed. The invention is a device for coupling in accordance with claim 1.

In one embodiment, a device for coupling components, comprises: a first element having at least one inclined surface; and a second element having at least one inclined surface reciprocal to the at least one inclined surface of the first element, wherein an axial movement of at least one of the elements causes a radial force to be applied to at least one of the components.

In some embodiments, the device of claim 1, further comprises a positioning/retaining element configured to cooperate with at least one of the first element and the second element.

In some embodiments, the positioning/retaining element is in threaded engagement with at least one of the first element and the second element.

In some embodiments, the positioning/retaining element is coupled to the second element by an interlock connection.

In some embodiments, the positioning/retaining element is one of a nut, a bolt, a screw, and a mechanical fastener.

In some embodiments, the positioning/retaining element is at least partially received in one of the components.

In some embodiments, the positioning/retaining element is configured to cause the axial movement of the at least one of the first element and the second element.

In some embodiments, the first element includes a first portion and a second portion, wherein at least one of the first portion and the second portion includes the at least one inclined surface.

In some embodiments, the second element includes a first portion and a second portion, wherein at least one of the first portion and the second portion includes the at least one inclined surface.

In some embodiments, at least one of the first element and the second element includes one or more apertures formed therein.

In some embodiments, at least one of the first element and the second element includes one or more dividers formed therein.

In some embodiments, at least one of the first element and the second element is an annular ring.

In some embodiments, a coefficient of friction of the device is about 0.02

According to the invention, the device further comprises a liner disposed between the at least one inclined surface of the first element and the at least one inclined surface of the second element.

The liner is an anti-friction fabric.

### DRAWINGS

The drawings described herein are for illustrative purposes only of selected embodiments and not all possible implementations, and are not intended to limit the scope of the present disclosure.
FIG. 1 is a perspective view of an exemplary coupling device in accordance with an embodiment of the present invention.
FIG. 2 is a fragmentary cross-sectional elevational view of the exemplary coupling device of FIG. 1 in use with a pair of components.
FIG. 3 is a perspective view of an exemplary coupling device in accordance with another embodiment of the present invention.
FIG. 4 is a fragmentary cross-sectional elevational view of the exemplary coupling device of FIG. 3 in use with a pair of components.
FIG. 5 is a perspective view of an exemplary coupling device in accordance with another embodiment of the present invention.
FIG. 6 is a fragmentary cross-sectional elevational view of the exemplary coupling device of FIG. 5 in use with a pair of components.
FIG. 7 is a cross-sectional elevational view of an exemplary coupling device in accordance with another embodiment of the present invention.
FIG. 8 is a cross-sectional elevational view of an exemplary coupling device in accordance with another embodiment of the present invention.
FIG. 9 is a cross-sectional elevational view of an exemplary coupling device in accordance with another embodiment of the present invention.

### DETAILED DESCRIPTION

The following description of technology is merely exemplary in nature of the subject matter, manufacture and use of one or more present disclosures, and is not intended to limit the scope, application, or uses of any specific present disclosure claimed in this application or in such other applications as may be filed claiming priority to this application, or patents issuing therefrom. Regarding methods disclosed, the order of the steps presented is exemplary in nature, and thus, the order of the steps can be different in various embodiments. "A" and "an" as used herein indicate "at least one" of the item is present; a plurality of such items may be present, when possible. Except where otherwise expressly indicated, all numerical quantities in this description are to be understood as modified by the word "about" and all geometric and spatial descriptors are to be understood as modified by the word "substantially" in describing the broadest scope of the technology. "About" when applied to numerical values indicates that the calculation or the measurement allows some slight imprecision in the value (with some approach to exactness in the value; approximately or reasonably close to the value; nearly). If, for some reason, the imprecision provided by "about" and/or "substantially" is not otherwise understood in the art with this ordinary meaning, then "about" and/or "substantially" as used herein indicates at least variations that may arise from ordinary methods of measuring or using such parameters.

Although the open-ended term "comprising," as a synonym of non-restrictive terms such as including, containing, or having, is used herein to describe and claim embodiments of the present technology, embodiments may alternatively be described using more limiting terms such as "consisting of" or "consisting essentially of." Thus, for any given embodiment reciting materials, components, or process steps, the present technology also specifically includes embodiments consisting of, or consisting essentially of, such materials, components, or process steps excluding additional materials, components or processes (for consisting of) and excluding additional materials, components or processes affecting the significant properties of the embodiment (for consisting essentially of), even though such additional materials, components or processes are not explicitly recited in this application. For example, recitation of a composition or process reciting elements A, B and C specifically envisions embodiments consisting of, and consisting essentially of, A, B and C, excluding an element D that may be recited in the art, even though element D is not explicitly described as being excluded herein.

As referred to herein, all compositional percentages are by weight of the total composition, unless otherwise specified. Disclosures of ranges are, unless specified otherwise, inclusive of endpoints and include all distinct values and further divided ranges within the entire range. Thus, for example, a range of "from A to B" or "from about A to about B" is inclusive of A and of B. Disclosure of values and ranges of values for specific parameters (such as amounts, weight percentages, etc.) are not exclusive of other values and ranges of values useful herein. It is envisioned that two or more specific exemplified values for a given parameter may define endpoints for a range of values that may be claimed for the parameter. For example, if Parameter X is exemplified herein to have value A and also exemplified to have value Z, it is envisioned that Parameter X may have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if Parameter X is exemplified herein to have values in the range of 1-10, or 2-9, or 3-8, it is also envisioned that Parameter X may have other ranges of values including 1-9, 1-8, 1-3, 1-2, 2-10, 2-8, 2-3, 3-10, 3-9, and so on.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

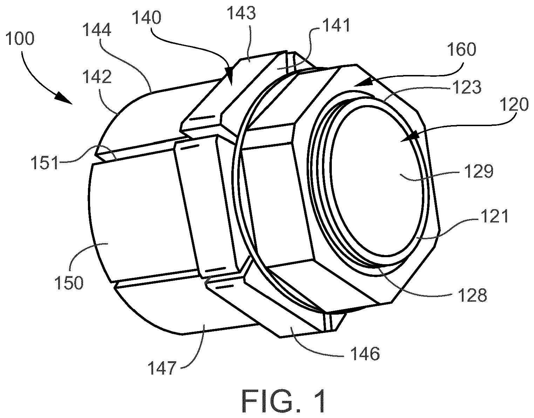

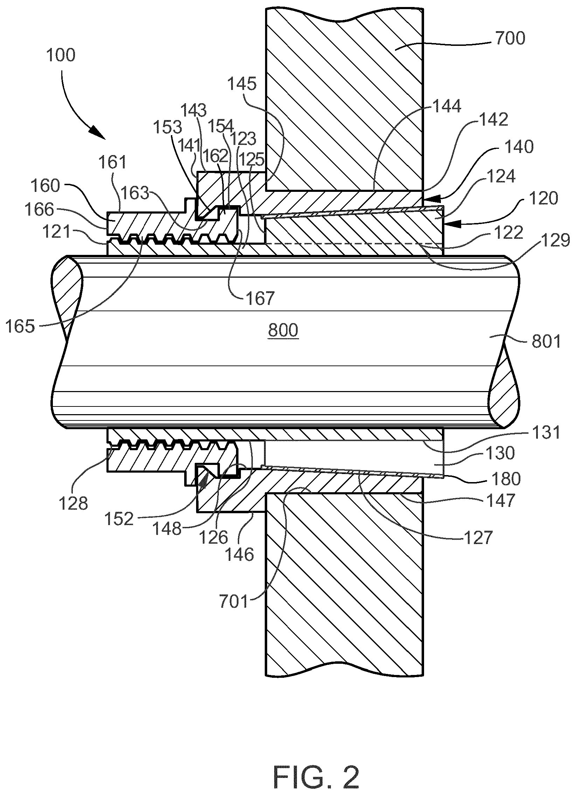

FIGS. 1 and 2 illustrate a coupling device 100 according to an embodiment of the present disclosure. The coupling device 100 may be employed to couple together a plurality components. In some embodiments, the coupling device 100 may be configured to couple stationary components together. For example, the coupling device 100 may be employed to couple a first stationary component (e.g., a working component) to a second stationary component (e.g., mounting structure or component). In other embodiments, the coupling device 100 may be configured to couple movable components so that the components move together. For example, the coupling device 100 may be used to couple rotatable components so that they rotate together. In yet other embodiments, the coupling device 100 may be configured to couple one or more moveable components to one or more stationary components. In the exemplary embodiment shown, the coupling device 100 may be configured to couple a hub component 700 with a shaft component 800. The coupling device 100 may be configured to apply a radial force to the shaft component 800 as well as configured to apply a radial force to the hub component 700 coupling the hub component 700 to the shaft component 800.

As best shown in FIG. 2, an exemplary embodiment of the coupling device 100 comprises an inner element 120, an outer element 140, and a positioning/retaining element 160 (e.g., a nut, a bolt, a screw, or any type of mechanical fastener, and the like, etc.). According to the invention, the coupling device 100 further comprises a liner 180 disposed between the inner element 120 and the outer element 140. The inner element 120 may comprise a hollow main body having a first end 121 and a second end 122. The inner element 120 may be configured to at least partially fit within the outer element 140. The inner element 120 may include a first portion 123 and a second portion 124. A shoulder 125 may be formed at a juncture of the first portion 123 and the second portion 124. The first portion 123 may be configured to cooperate with the positioning/retaining element 160 to cause relative movement therebetween and the second portion 124 may be configured to cooperate with the outer element 140 to couple the components 700, 800 together. As depicted, the first portion 123 may have a generally uniform outer surface 126 having a substantially constant outer diameter and the second portion 124 has a generally inclined outer surface 127 having an outer diameter that gradually increases from adjacent the first portion 123 of the inner element 120 to the second end 122 thereof. Accordingly, the second portion 124 of the inner element 120 has a generally frustoconical cross-sectional shape.

In some embodiments, the first portion 123 of the inner element 120 may include a plurality of external features 128 (e.g., threads, teeth, and the like) formed thereon. The external features 128 may be configured to cooperate with the positioning/retaining element 160 to cause relative movement therebetween. The external features 128 may extend from the first end 121 of the inner element 120 to the shoulder 125 thereof. It should be appreciated that various other means and methods of causing relative movement between the inner element 120 and the positioning/retaining element 160 may be employed if desired.

An inner surface 129 of the inner element 120 may be configured to engage the shaft component 800. A shape, size, and configuration of the inner surface 129 may correspond with an outer surface 801 of the shaft component 800. For example, if the shaft component 800 has an irregular outer surface 801 (e.g., inclined or frustoconical), the inner element 120 may have a corresponding irregular inner surface 129 (e.g., inclined or frustoconical). In another example, if the shaft component 800 is cylindrical, the inner surface 129 of the inner element 120 may also be cylindrical with an inner diameter corresponding to an outer diameter of the shaft component 800. The inner diameter of the inner element 120 may be slightly larger than the outer diameter of the shaft component 800 to allow for free sliding movement both axially and radially along the shaft component 800 prior to actuation of the coupling device 100.

In certain embodiments, the inner element 120 may be configured to engage the shaft component 800 by contraction so that the inner element 120 grips the shaft component 800 via frictional forces. To achieve this, the inner element 120 may comprise a plurality of segments 130 defined by one or more dividers 131 (e.g., slots, grooves, and the like) formed longitudinally or axially in the outer surface 126 and/or the outer surface 127 and/or the inner surface 129 of the inner element 120. The dividers 131 are configured to allow radial deflection of the inner element 120 as the coupling device 100 is engaged and/or disengaged. In certain embodiments, the dividers 131 may extend at least partially through only the second portion 124 of the inner element 120, thereby the first portion 123 remains continuous. A number as well as the length, width, and/or spacing of the dividers 131 may be varied to provide a desired flexibility of the inner element 120 for a specific application.

As illustrated, the outer element 140 may comprise a hollow main body having a first end 141 and a second end 142. The outer element 140 may be configured to at least partially surround the inner element 120. The outer element 140 may include a first portion 143 and a second portion 144. A shoulder 145 may be formed at a juncture of the first portion 143 and the second portion 144. The first portion 143 may be configured to cooperate with the positioning/retaining element 160 to cause relative movement of the outer element 140, and the second portion 144 may be configured to cooperate with the inner element 120 to couple the components 700, 800 together. As depicted, the first portion 143 may have a generally uniform outer surface 146 having a substantially constant outer diameter and the second portion 144 may also have a generally uniform outer surface 127 having an substantially constant outer diameter. In certain instances, the outer diameter of the first portion 143 is greater than the outer diameter of the second portion 144, which in turn forms the shoulder 145.

In certain embodiments, the outer element 140 may be configured to engage the hub component 700 by expansion so that the outer element 140 grips the hub component 700 via frictional forces. To achieve this, the outer element 140 may comprise a plurality of segments 150 defined by one or more dividers 151 (e.g., slots, grooves, and the like) formed longitudinally or axially in the outer surface 147 and/or inner surface 148 of the outer element 140. The dividers 151 are configured to allow radial deflection of the outer element 140 as the coupling device 100 is engaged and/or disengaged. The dividers 151 may extend at least partially through the first portion 143 and/or the second portion 144 of the outer element 140. A number as well as the length, width, and/or spacing of the dividers 151 may be varied to provide a desired flexibility of the outer element 140 for a specific application.

The outer surface 147 of the outer element 140 may be configured to correspond with an inner surface 701 of the hub component 700. For example, if the hub component 700 has an irregular inner surface 701 (e.g., inclined or frustoconical), the outer element 140 may have a corresponding irregular outer surface 147 (e.g., inclined or frustoconical). In another example, if the hub component 700 is cylindrical, the outer surface 147 of the outer element 140 may also be cylindrical with an outer diameter corresponding to an inner diameter of the hub component 700. The outer diameter of the outer element 140 may be slightly smaller than the inner diameter of the hub component 700 to allow for free sliding movement both axially and radially along the hub component 700 prior to actuation of the coupling device 100.

As shown, the inner surface 148 of the outer element 140 may be configured to engage the inner element 120. A shape, size, and configuration of the inner surface 148 may correspond with the outer surface 127 of the inner element 120. The outer diameter of the inner element 120 may be slightly smaller than the inner diameter of the outer element 140 to allow for movement of the outer element 140 relative to the inner element 120 during actuation or engagement of the coupling device 100.

In the embodiment depicted in FIGS. 1 and 2, the inner element 120 and outer element 140 have reciprocally inclined outer and inner surfaces 127, 152, respectively. The inner and outer elements 120, 140 may be configured so that displacement of the outer element 140 relative to the inner element 120 imparts greater radial force than axial force. Accordingly, the forces created by the reciprocally inclined outer and inner surfaces 127, 152 cause greater radial forces than axial forces. Therefore, an engagement (e.g., a rotation in a first direction) of the positioning/retaining element 160 causes the inner element 120 to be urged radially inward onto the shaft component 800 with sufficient force to impede axial displacement of the inner element 120 relative to the shaft component 800 and the outer element 140 to be urged radially outward onto the hub component 700 with sufficient force to impede axial displacement of the outer element 140 relative to the hub component 700.

As best seen in FIG. 2, the outer element 140 further includes an interlock 152 for connecting the outer element 140 with the positioning/retaining element 160. The interlock 152 of the outer element 140 may be configured to connect the outer element 140 to the positioning/retaining element 160 so as to allow the positioning/retaining element 160 to rotate relative to the outer element 140 while substantially impeding axial movement of the outer element 140 relative to the positioning/retaining element 120. In some embodiments, the interlock 152 may comprise a circumferential flange 153 that extends around a circumference of the outer element 140, projecting radially inward. Further, the interlock may comprise a circumferential groove 154 that extends around the circumference of the outer element 140 adjacent the circumferential flange 153. As illustrated, an outer surface 161 of the positioning/retaining element 160 may include a circumferential flange 162 and a circumferential groove 163. The circumferential flange 162 that projects radially outward and extends around the circumference of the positioning/retaining element 160 may be configured to be received in the circumferential groove 154 of the outer element 140. The circumferential groove 163 that extends around the circumference of the positioning/retaining element 160 may be configured to receive the circumferential flange 153 of the outer element 140 therein. It is understood that various other interlocks may be employed as the interlock 152, if desired.

In some embodiments, the positioning/retaining element 160 may have an inner diameter that may be larger than the outer diameter of the shaft component 800. Additionally, the outer diameter of the positioning/retaining element 160 may be larger than the outer diameter of the inner element 120. As discussed above, the positioning/retaining element 160 may be connected to the outer element 140 in a manner that substantially impedes axial displacement of the inner element 120 relative to the positioning/retaining element 160. In certain instances, an inner surface 164 of the positioning/retaining element 160 may include a plurality of internal features 165 (e.g., threads, teeth, and the like) formed thereon. The internal features 165 of the positioning/retaining element 160 may be configured to cooperate with the external features 128 of the inner element 120 to cause relative movement therebetween. The internal features 165 may extend from a first end 166 of the positioning/retaining element 160 to ta second end 167 thereof.

As more clearly shown in the embodiment of FIG. 2, the coupling device 100 further includes a liner 180 for minimizing friction between the outer surface 127 of the inner element 120 and the inner surface 148 of the outer element 140. The liner 180 is produced from an anti-friction fabric. In some embodiments, the liner 180 may be directly applied to the inner surface 148 of the outer element 140. Additionally, or alternatively, the liner 180 may directly applied to the outer surface 127 of the inner element 120. In some embodiments, the liner 180 may be produced from a woven material coated with a reinforcing thermoset resin. The woven material may include PTFE fibers, aramid fiber, carbon fiber, other comparable fibers, and combinations thereof. In some embodiments, the liner 180 may further comprise an additional performance coating comprised of PTFE. In some embodiments, the liner 180 may further include a resin layer for self-lubrication. The resin layer may comprise PTFE. In some embodiments, the liner 180 may be a Fenlon^{™} liner fabric such as Fenlon^{™} Asta, or Fenlon^{™} Low Friction Solid Lubricants.

The various embodiments of the liner 180 described herein are configured to reduce a coefficient of friction (CoF) between the outer surface 127 of the inner element 120 and the inner surface 148 of the outer element 140 of the coupling device 100. Minimizing a frictional loss between the surfaces 127, 148 results in a generation of increased radial forces. Minimizing the frictional loss results in the coupling device 100 being easier to install, requiring less torque and/or less time. Additionally, the reduction in frictional loss in the coupling device 100 increases a performance thereof.

In some embodiments, the coupling device 100 may further comprise an additional spacer or sleeve configured to cooperate with the outer surface 147 of the outer element 140. In some embodiments, the spacer or sleeve may be the positioning sleeve described in U.S. Patent No. 9,618,051.

To engage the coupling device 100 and couple the components 700, 800, the positioning/retaining element 160 is rotated in the first direction causing relative movement between the positioning/retaining element 160 and the inner element 140 via cooperation of the features 128, 165 and applying an axial force on the outer element 140 via the interlock 152. The reciprocal inclined surfaces 127, 148 of the inner and outer elements 120, 140, respectively, result in opposing radial forces. In particular, the inner element 120 contracts to apply a radially inward force on the shaft component 800 and the outer element 140 expands to apply a radially outward force on the hub component 700, thereby coupling the components 700, 800 together. As depicted, the interlock 152 cooperates with the positioning/retaining element 160 to connect the outer element 140 to the positioning/retaining element 160 so as to allow the positioning/retaining element 160 to rotate relative to the outer element 140 and relative axial movement between the inner element 120 and the outer element 140, while substantially impeding axial movement of the outer element 140 relative to the positioning/retaining element 160.

To disengage the coupling device 100 and decouple the components 700, 800, the positioning/retaining element 160 is rotated in an opposite second direction causing relative movement between the positioning/retaining element 160 and the inner element 140 via cooperation of the features 128, 165 and releasing both the axial force on the outer element 140 via the interlock 152 and the opposing radial forces caused by the reciprocal inclined surfaces 127, 148 of the inner and outer elements 120, 140, respectively.

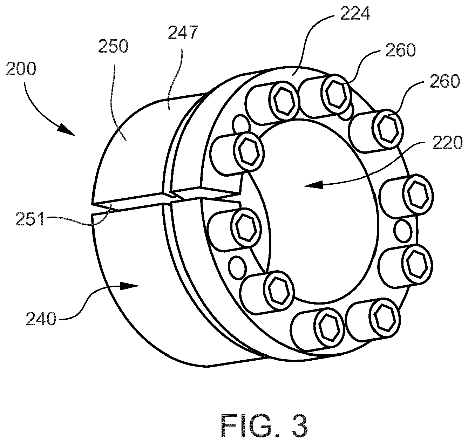

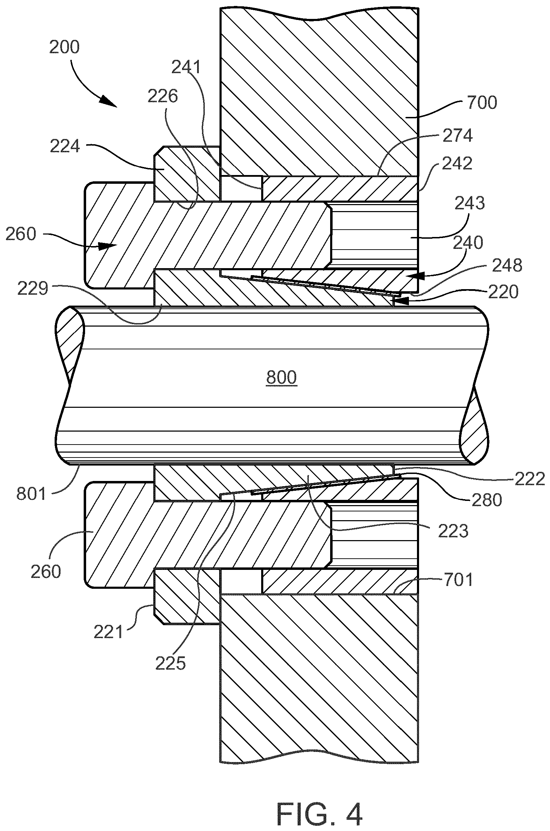

Referring to FIGS. 3 and 4, a coupling device 200 according to another embodiment of the present disclosure is illustrated. The coupling device 200 may be employed to couple together a plurality components. In some embodiments, the coupling device 200 may be configured to couple stationary components together. For example, the coupling device 200 may be employed to couple a first stationary component (e.g., a working component) to a second stationary component (e.g., mounting structure or component). In other embodiments, the coupling device 200 may be configured to couple movable components so that the components move together. For example, the coupling device 200 may be used to couple rotatable components so that they rotate together. In yet other embodiments, the coupling device 200 may be configured to couple one or more moveable components to one or more stationary components. In the exemplary embodiment shown, the coupling device 200 may be configured to couple a hub component 700 with a shaft component 800. The coupling device 200 may be configured to apply a radial force to the shaft component 800 as well as configured to apply a radial force to the hub component 700 coupling the hub component 700 to the shaft component 800.

As best shown in FIG. 4, an exemplary embodiment of the coupling device 200 comprises an inner element 220, an outer element 240, and one or more positioning/retaining elements 260 (e.g., a nut, a bolt, a screw, or any type of mechanical fastener, and the like, etc.). The inner element 220 may be configured to at least partially fit within the outer element 240. According to the invention, the coupling device 200 further comprises a liner 280 disposed between the inner element 220 and the outer element 240. The inner element 220 may have a first end 221 and a second end 222. In some embodiments, the inner element 220 may comprise a sleeve portion 223 provided with a radially outward extending flange portion 224. As depicted, the cylindrical sleeve 223 has a generally inclined outer surface 225 having an outer diameter that gradually decreases from adjacent the flange portion 224 of the inner element 220 to the second end 222 thereof. Accordingly, the sleeve portion 223 of the inner element 220 has a generally frustoconical cross-sectional shape. As illustrated, the flange portion 224 may include one or more apertures 226 formed therein. Each of the apertures 226 may be configured to receive a respective one of the positioning/retaining elements 260 therein. It is understood that more or less apertures 226 than shown may be formed in the flange portion 224 as desired.

An inner surface 229 of the inner element 220 may be configured to engage the shaft component 800. A shape, size, and configuration of the inner surface 229 may correspond with an outer surface 801 of the shaft component 800. For example, if the shaft component 800 has an irregular outer surface 801 (e.g., inclined or frustoconical), the inner element 220 may have a corresponding irregular inner surface 229 (e.g., inclined or frustoconical). In another example, if the shaft component 800 is cylindrical, the inner surface 229 of the inner element 220 may also be cylindrical with an inner diameter corresponding to an outer diameter of the shaft component 800. The inner diameter of the inner element 220 may be slightly larger than the outer diameter of the shaft component 800 to allow for free sliding movement both axially and radially along the shaft component 800 prior to actuation or engagement of the coupling device 200.

In certain embodiments, the inner element 220 may be configured to engage the shaft component 800 by contraction so that the inner element 220 grips the shaft component 800 via frictional forces. To achieve this, the inner element 220 may comprise a plurality of segments (not depicted) defined by one or more dividers (e.g., slots, grooves, and the like) formed longitudinally or axially in the inner surface 229 and/or the outer surface 225 of the inner element 220. The dividers are configured to allow radial deflection of the inner element 220 as the coupling device 200 is engaged and/or disengaged. In certain embodiments, the dividers may extend at least partially through the inner element 220. A number as well as the length, width, and/or spacing of the dividers may be varied to provide a desired flexibility of the inner element 220 for a specific application.

As illustrated, the outer element 240 may comprise a main body having a first end 241 and a second end 242. In some embodiments, the outer element 240 may be an annular ring. The outer element 240 may be configured to at least partially surround the inner element 220. The outer element 240 may include one or more apertures 243 formed therein. In some instances, the apertures 243 are formed in a radial array configuration. Each of the apertures 243 may be configured to receive a respective one of the positioning/retaining elements 260 therein.

In some embodiments, an inner surface 244 of the apertures 243 may include a plurality of internal features (e.g., threads, teeth, and the like) formed thereon. The internal features may be configured to cooperate with the positioning/retaining element 260 to cause relative movement therebetween and/or relative movement between the inner and outer elements 220, 240 to couple the components 700, 800 together. The internal features may extend from the first end 241 of the outer element 240 to the second end 242 thereof. It should be appreciated that various other means and methods of causing relative movement between the elements 220, 240 and/or the positioning/retaining element 260 may be employed if desired.

In certain embodiments, the outer element 240 may be configured to engage the hub component 700 by expansion so that the outer element 240 grips the hub component 700 via frictional forces. To achieve this, the outer element 240 may comprise one or more segments 250 defined by one or more dividers 251 (e.g., slots, grooves, and the like) formed longitudinally or axially in an outer surface 247 and/or an inner surface 248 of the outer element 240. The dividers 251 are configured to allow radial deflection of the outer element 240 as the coupling device 200 is engaged and/or disengaged. The dividers 251 may extend at least partially through the outer element 240. A number as well as the length, width, and/or spacing of the dividers 251 may be varied to provide a desired flexibility of the outer element 240 for a specific application.

The outer surface 247 of the outer element 240 may be configured to correspond with an inner surface 701 of the hub component 700. For example, if the hub component 700 has an irregular inner surface 701 (e.g., inclined or frustoconical), the outer element 240 may have a corresponding irregular outer surface 247 (e.g., inclined or frustoconical). In another example, if the hub component 700 is cylindrical, the outer surface 247 of the outer element 240 may also be cylindrical with an outer diameter corresponding to an inner diameter of the hub component 700. The outer diameter of the outer element 240 may be slightly smaller than the inner diameter of the hub component 700 to allow for free sliding movement both axially and radially along the hub component 700 prior to actuation or engagement of the coupling device 200.

The inner surface 248 of the outer element 240 may be configured to engage the inner element 220. As depicted, the outer element 240 has a generally inclined outer surface 248 having an inner diameter that gradually decreases from a first end 241 of the outer element 240 to the second end 242 thereof. Accordingly, the outer element 240 has a generally frustoconical cross-sectional shape. A shape, size, and configuration of the inner surface 248 may correspond with the outer surface 225 of the inner element 220. The outer diameter of the inner element 220 may be slightly smaller than the inner diameter of the outer element 240 to allow for movement of the outer element 240 relative to the inner element 220 during actuation or engagement of the coupling device 200.

In the embodiment depicted in FIGS. 3 and 4, the inner element 220 and outer element 240 have reciprocally inclined outer and inner surfaces 225, 248, respectively. The inner and outer elements 220, 240 may be configured so that displacement of the outer element 240 relative to the inner element 220 imparts greater radial force than axial force. Accordingly, the forces created by the reciprocally inclined outer and inner surfaces 225, 248 cause greater radial forces than axial forces. Therefore, an engagement (e.g., a rotation in a first direction) of the positioning/retaining elements 260 causes the inner element 220 to be urged radially inward onto the shaft component 800 with sufficient force to impede axial displacement of the inner element 220 relative to the shaft component 800 and the outer element 240 to be urged radially outward onto the hub component 700 with sufficient force to impede axial displacement of the outer element 240 relative to the hub component 700.

As discussed above, the portioning/retaining element 260 may be connected to the outer element 240 in a manner that substantially impedes axial displacement of the inner element 220 relative to the positioning/retaining element 260. In certain instances, each of the positioning/retaining elements 260 may include a plurality of external features (e.g., threads, teeth, and the like) formed thereon. The external features of the portioning/retaining element 260 may be configured to cooperate with the internal features of the outer element 240 to cause relative movement therebetween and/or between the outer element 240 and the inner element 220.

As more clearly shown in the embodiment of FIG. 4, the coupling device 200 further includes a liner 280 for minimizing friction between the outer surface 225 of the inner element 220 and the inner surface 248 of the outer element 240. The liner 280 is produced from an anti-friction fabric. In some embodiments, the liner 280 may be directly applied to the inner surface 248 of the outer element 240. Additionally, or alternatively, the liner 280 may directly applied to the outer surface 225 of the inner element 220. In some embodiments, the liner 280 may be produced from a woven material coated with a reinforcing thermoset resin. The woven material may include PTFE fibers, aramid fiber, carbon fiber, other comparable fibers, and combinations thereof. In some embodiments, the liner 180 may further comprise an additional performance coating comprised of PTFE. In some embodiments, the liner 180 may further include a resin layer for self-lubrication. The resin layer may comprise PTFE. In some embodiments, the liner 180 may be a Fenlon^{™} liner fabric such as Fenlon^{™} Asta, or Fenlon^{™} Low Friction Solid Lubricants.

The various embodiments of the liner 280 described herein are configured to reduce a coefficient of friction (CoF) between the outer surface 225 of the inner element 220 and the inner surface 248 of the outer element 240 of the coupling device 200. Minimizing a frictional loss between the surfaces 225, 248 results in a generation of increased radial forces. Minimizing the frictional loss results in the coupling device 200 being easier to install, requiring less torque and/or less time. Additionally, the reduction in frictional loss in the coupling device 200 increases a performance thereof.

In some embodiments, the coupling device 200 may further comprise an additional spacer or sleeve configured to cooperate with the outer surface 247 of the outer element 240. In some embodiments, the spacer or sleeve may be the positioning sleeve described in U.S. Patent No. 9,618,051.

To engage the coupling device 200 and couple the components 700, 800, the positioning/retaining elements 260 are rotated in the first direction causing relative movement between the positioning/retaining element 260 and the outer element 240 via cooperation of the external and internal features thereof and applying an axial force on the inner element 220. The reciprocal inclined surfaces 225, 248 of the inner and outer elements 220, 240, respectively, result in opposing radial forces. In particular, the inner element 220 contracts to apply a radially inward force on the shaft component 800 and the outer element 240 expands to apply a radially outward force on the hub component 700, thereby coupling the components 700, 800 together.

To disengage the coupling device 200 and decouple the components 700, 800, the positioning/retaining elements 260 are rotated in an opposite second direction causing relative movement between the positioning/retaining element 260 and the outer element 240 via cooperation of the external and internal features thereof and releasing both the axial force on the inner element 220 and the opposing radial forces caused by the reciprocal inclined surfaces 225, 248 of the inner and outer elements 220, 240, respectively.

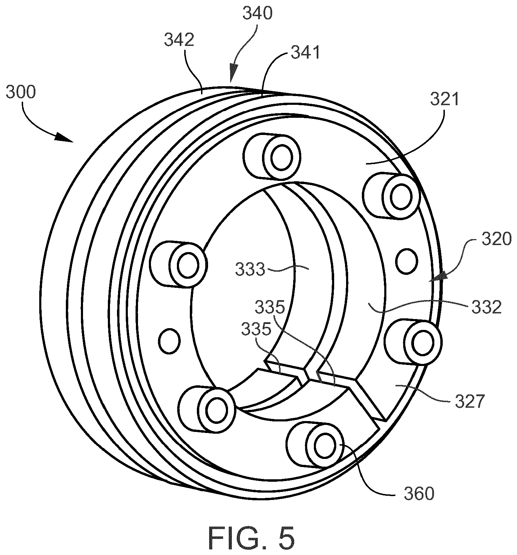

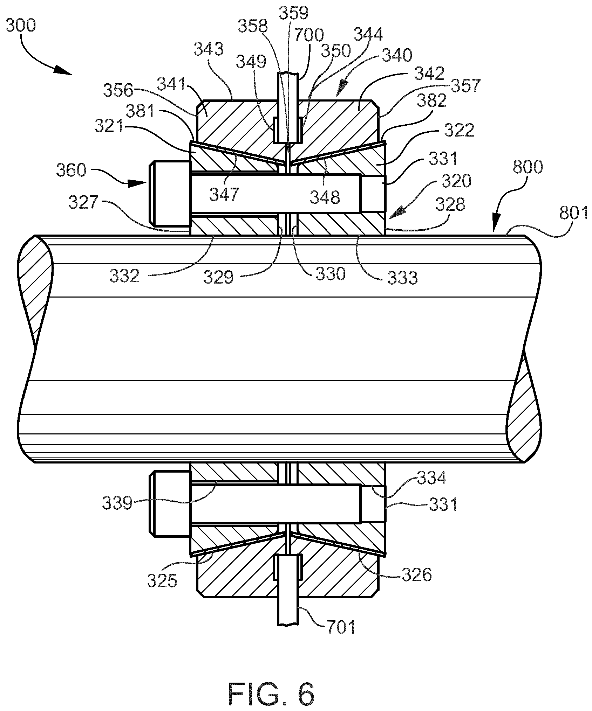

Referring to FIGS. 5 and 6, a coupling device 300 according to another embodiment of the present disclosure is illustrated. The coupling device 300 may be employed to couple together a plurality components. In some embodiments, the coupling device 300 may be configured to couple stationary components together. For example, the coupling device 300 may be employed to couple a first stationary component (e.g., a working component) to a second stationary component (e.g., mounting structure or component). In other embodiments, the coupling device 300 may be configured to couple movable components so that the components move together. For example, the coupling device 300 may be used to couple rotatable components so that they rotate together. In yet other embodiments, the coupling device 300 may be configured to couple one or more moveable components to one or more stationary components. In the exemplary embodiment shown, the coupling device 300 may be configured to couple a hub component 700 with a shaft component 800. The coupling device 300 may be configured to apply a radial force to the shaft component 800 as well as configured to apply a radial force to the hub component 700 coupling the hub component 700 to the shaft component 800.

As best shown in FIG. 6, an exemplary embodiment of the coupling device 300 comprises an inner element 320, an outer element 340, and one or more positioning/retaining elements 360 (e.g., a nut, a bolt, a screw, or any type of mechanical fastener, and the like, etc.). The inner element 320 may be configured to at least partially fit within the outer element 340. The coupling device 300 further comprises a liner 380 disposed between the inner element 320 and the outer element 340. The inner element 320 comprises a first portion 321 and a second portion 322. As depicted, each of the portions 321, 322 has a generally inclined outer surface 325, 326, respectively, having an outer diameter that gradually decreases from outer faces 327, 328 of the portions 321, 322 to respective inner faces 329, 330 thereof. Accordingly, each of the portions 321, 322 of the inner element 320 has a generally frustoconical cross-sectional shape. In some embodiments, each of the portions 321, 322 may be an annular ring.

As illustrated, the portions 321, 322 may each include one or more apertures 331 formed therein. In some instances, the apertures 331 are formed in a radial array configuration. Each of the apertures 331 may be configured to receive a respective one of the positioning/retaining elements 360 therein. It is understood that more or less apertures 331 than shown may be formed in the portions 321, 322 as desired.

In some embodiments, an inner surface 334 of the apertures 331 may include a plurality of internal features (e.g., threads, teeth, and the like) formed thereon. The internal features may be configured to cooperate with the positioning/retaining element 360 to cause relative movement therebetween and/or relative movement between the inner and outer elements 320, 340 to couple the components 700, 800 together. It should be appreciated that various other means and methods of causing relative movement between the elements 320, 340 and/or the positioning/retaining element 360 may be employed if desired.

Inner surfaces 332, 333 of the portions 321, 322, respectively, may be configured to engage the shaft component 800. A shape, size, and configuration of the inner surfaces 332, 333 may correspond with an outer surface 801 of the shaft component 800. For example, if the shaft component 800 has an irregular outer surface 801 (e.g., inclined or frustoconical), at least one of the portions 321, 322 may have a corresponding irregular inner surface 332, 333 (e.g., inclined or frustoconical). In another example, if the shaft component 800 is cylindrical, the inner surfaces 332, 333 of the portions 321, 322 may also be cylindrical with inner diameters corresponding to an outer diameter of the shaft component 800. The inner diameters of the portions 321, 322 may be slightly larger than the outer diameter of the shaft component 800 to allow for free sliding movement both axially and radially along the shaft component 800 prior to actuation or engagement of the coupling device 300.

In certain embodiments, the portions 321, 322 of the inner element 320 may be configured to engage the shaft component 800 by contraction so that the portions 321, 322 grip the shaft component 800 via frictional forces. To achieve this, at least one of the portions 321, 322 of the inner element 320 may comprise a plurality of segments defined by one or more dividers 335 (e.g., slots, grooves, and the like) formed axially in the inner surfaces 332, 333 and/or the outer surfaces 325, 326 of the portions 321, 322. The dividers 335 are configured to allow radial deflection of the inner element 320 as the coupling device 300 is engaged and/or disengaged. In certain embodiments, the dividers 335 may extend at least partially through the inner element 320. A number as well as the length, width, and/or spacing of the dividers 335 may be varied to provide a desired flexibility of the inner element 320 for a specific application.

As illustrated, the outer element 340 comprises a first portion 341 and a second portion 342. Each of the portions 341, 342 has a generally inclined inner surface 347, 348, respectively, having an inner diameter that gradually decreases from outer faces 356, 357 of the portions 321, 322 to respective inner faces 358, 359 thereof. Accordingly, each of the portions 341, 342 of the outer element 340 has a generally frustoconical cross-sectional shape. In some embodiments, each of the portions 341, 342 may be an annular ring.

In certain embodiments, the portions 341, 342 of the outer element 340 may be configured to engage the hub component 700 by expansion so that the outer element 340 grips the hub component 700 via frictional forces. To achieve this, one or more of the portions 341, 342 of the outer element 340 may comprise one or more segments defined by one or more dividers (e.g., slots, grooves, and the like) formed longitudinally or axially in respective outer surfaces 343, 344 and/or inner surfaces 347, 348 of the portions 341, 342 of the outer element 340. The dividers are configured to allow radial deflection of the outer element 340 as the coupling device 300 is engaged and/or disengaged. The dividers may extend at least partially through the outer element 340. A number as well as the length, width, and/or spacing of the dividers may be varied to provide a desired flexibility of the outer element 340 for a specific application.

Engaging surfaces 349, 350 of the portions 341, 342 of the outer element 340 may be configured to correspond with an engaging surface 701 of the hub component 700. For example, if the hub component 700 has an irregular engaging surface 701 (e.g., inclined or frustoconical), the outer element 340 may have at least one corresponding irregular engaging surface 349, 350 (e.g., inclined or frustoconical). In another example, if the hub component 700 is cylindrical, at least one of the engaging surfaces 349, 350 of the respective portions 341, 342 of the outer element 340 may also be cylindrical. The diameter of the engaging surfaces 349, 350 of the portions 341, 342 may be slightly larger than the outer diameter of the hub component 700 to allow for free sliding movement along the hub component 700 prior to actuation or engagement of the coupling device 300.

Each of the inner surfaces 347, 348 of the portions 341, 342 of the outer element 340 may be configured to engage the inner element 320. A shape, size, and configuration of the inner surfaces 347, 348 may correspond with the respective outer surfaces 325, 326 of the portions 321, 322 of the inner element 320. The outer diameter of the inner element 320 may be slightly smaller than the inner diameter of the outer element 340 to allow for movement of the outer element 340 relative to the inner element 320 during actuation or engagement of the coupling device 300.

In the embodiment depicted in FIGS. 5 and 6, the portions 321, 322 of the inner element 320 and the portions 341, 342 of the outer element 340 have reciprocally inclined outer surfaces 325, 326 and inner surfaces 347, 348, respectively. The inner and outer elements 320, 340 may be configured so that displacement of the outer element 340 relative to the inner element 320 imparts greater radial force than axial force. Accordingly, the forces created by the reciprocally inclined surfaces 325, 326, 347, 348 cause greater radial forces than axial forces. Therefore, an engagement (e.g., a rotation in a first direction) of the positioning/retaining elements 360 causes the inner element 320 to be urged radially inward onto the shaft component 800 with sufficient force to impede axial displacement of the inner element 320 relative to the shaft component 800 and the outer element 340 to be urged radially outward onto the hub component 700 with sufficient force to impede axial displacement of the outer element 340 relative to the hub component 700.

As discussed above, the portioning/retaining elements 360 may be connected to the inner element 320. In certain instances, each of the positioning/retaining elements 360 may include a plurality of external features (e.g., threads, teeth, and the like) formed thereon. The external features of the portioning/retaining element 360 may be configured to cooperate with the internal features of the inner element 340 to cause relative movement therebetween and/or between the portions 341, 342 of the outer element 340 and the portions 321, 322 of the inner element 320.

As more clearly shown in the embodiment of FIG. 6, the coupling device 300 further includes a liner 380 for minimizing friction between the outer surfaces 325, 326 of the portions 321, 322 of the inner element 320 and the inner surfaces 347, 348 of the portions 341, 342 of the outer element 340. In some embodiments, the liner 380 may comprise a first portion 381 and a second portion 382. The first portion 381 disposed between the surfaces 325, 347 and the second portion 382 disposed between the surfaces 326, 348. One or more of the portions 381, 382 of the liner 380 are produced from an anti-friction fabric. In some embodiments, one or more of the portions 381, 382 of the liner 280 may be directly applied to the inner surfaces 347, 348 of the outer element 340. Additionally, or alternatively, one or more of the portions 381, 382 of the liner 380 may directly applied to the outer surfaces 325, 326 of the inner element 320. In some embodiments, one or more of the portions 381, 382 of the liner 380 may be produced from a woven material coated with a reinforcing thermoset resin. The woven material may include PTFE fibers, aramid fiber, carbon fiber, other comparable fibers, and combinations thereof. In some embodiments, one or more of the portions 381, 382 of the liner 380 may further comprise an additional performance coating comprised of PTFE. In some embodiments, one or more of the portions 381, 382 of the liner 380 may further include a resin layer for self-lubrication. The resin layer may comprise PTFE. In some embodiments, one or more of the portions 381, 382 of the liner 380 may be a Fenlon^{™} liner fabric such as Fenlon^{™} Asta, or Fenlon^{™} Low Friction Solid Lubricants.

The various embodiments of the liner 380 described herein are configured to reduce a coefficient of friction (CoF) between the outer surfaces 325, 326 of the inner element 320 and the inner surfaces 347, 348 of the outer element 340 of the coupling device 300. Minimizing a frictional loss between the surfaces 325, 326, 347, 348 results in a generation of increased radial forces. Minimizing the frictional loss results in the coupling device 300 being easier to install, requiring less torque and/or less time. Additionally, the reduction in frictional loss in the coupling device 300 increases a performance thereof.

To engage the coupling device 300 and couple the components 700, 800, the positioning/retaining elements 360 are rotated in the first direction causing relative movement between the positioning/retaining element 360 and the portions 321, 322 of the inner element 320 via cooperation of the external and internal features thereof and applying an axial force on the inner element 320. In some instances, the portions 321, 322 of the inner element 320 are drawn closer together as the positioning/retaining elements 360 are rotated in the first direction. The reciprocal inclined surfaces 325, 326, 347, 348 of the inner and outer elements 320, 340, respectively, result in opposing radial forces. In particular, the portions 321, 322 of the inner element 320 contract to apply a radially inward force on the shaft component 800 and the portions 341, 342 of the outer element 340 expand so that the engaging surface 349, 350 thereof apply a clamping force on the hub component 700, thereby coupling the components 700, 800 together.

To disengage the coupling device 300 and decouple the components 700, 800, the positioning/retaining elements 360 are rotated in an opposite second direction causing relative movement between the positioning/retaining element 360 and the portions 321, 322 of the inner element 320 via cooperation of the external and internal features thereof and releasing both the axial force on the portions 321, 322 of the inner element 320 and the opposing radial forces caused by the reciprocal inclined surfaces 325, 326, 347, 348 of the inner and outer elements 320, 340, respectively.

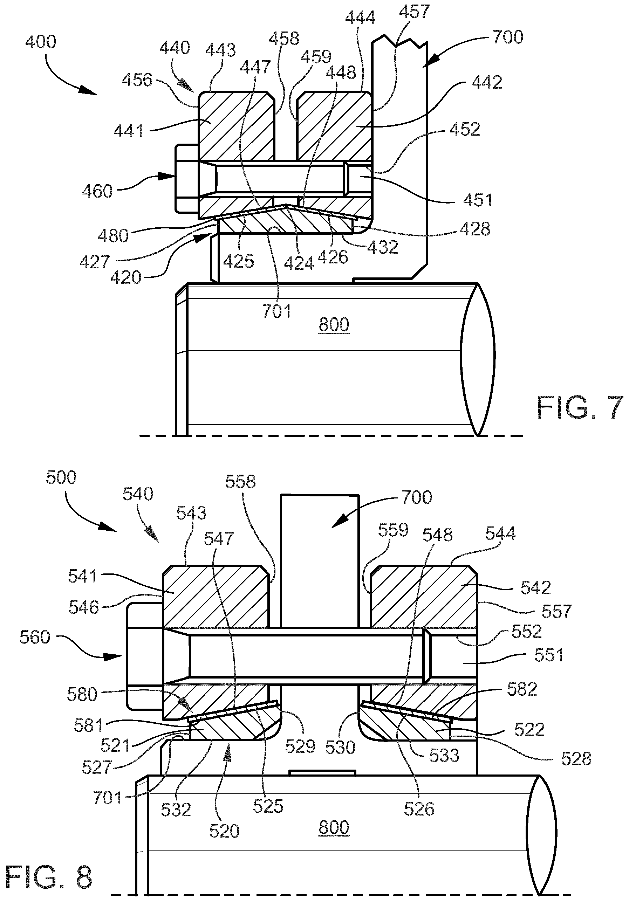

Turning now to FIG. 7, a coupling device 400 according to another embodiment of the present disclosure is illustrated. The coupling device 400 may be employed to couple together a plurality components. In some embodiments, the coupling device 400 may be configured to couple stationary components together. For example, the coupling device 400 may be employed to couple a first stationary component (e.g., a working component) to a second stationary component (e.g., mounting structure or component). In other embodiments, the coupling device 400 may be configured to couple movable components so that the components move together. For example, the coupling device 400 may be used to couple rotatable components so that they rotate together. In yet other embodiments, the coupling device 400 may be configured to couple one or more moveable components to one or more stationary components. In the exemplary embodiment shown, the coupling device 400 may be configured to couple a hub component 700 with a shaft component 800. The coupling device 400 may be configured to apply a radial force to the hub component 700 and/or the shaft component 800 coupling the hub component 700 to the shaft component 800.

An exemplary embodiment of the coupling device 400 comprises an inner element 420, an outer element 440, and one or more positioning/retaining elements 460 (e.g., a nut, a bolt, a screw, or any type of mechanical fastener, and the like, etc.). The inner element 420 may be configured to at least partially fit within the outer element 440. The coupling device 400 further comprises a liner 480 disposed between the inner element 420 and the outer element 440. The inner element 420 has generally inclined outer surface 425, 426 that form an apex 424. An outer diameter of the inner element 420 gradually increases from outer faces 427, 428 of the inner element 420 to the apex 424 thereof. In some embodiments, the inner element 420 may be an annular ring.

An inner surface 432 of the inner element 420 may be configured to engage the hub component 700. A shape, size, and configuration of the inner surface 432 may correspond with an outer surface 701 of the hub component 700. For example, if the hub component 700 has an irregular outer surface 701 (e.g., inclined or frustoconical), the inner element 420 may have a corresponding irregular inner surface 432 (e.g., inclined or frustoconical). In another example, if the hub component 700 is cylindrical, the inner surface 432 of the inner element 420 may also be cylindrical with an inner diameter corresponding to an outer diameter of the hub component 700. The inner diameter of the inner element 420 may be slightly larger than the outer diameter of the hub component 700 to allow for free sliding movement both axially and radially along the hub component 700 prior to actuation or engagement of the coupling device 400.

In certain embodiments, the inner element 420 may be configured to engage the hub component 700 by contraction so that the inner element 420 grips the hub component 700 via frictional forces. To achieve this, the inner element 420 may comprise a plurality of segments defined by one or more dividers (e.g., slots, grooves, and the like) formed axially in the inner surface 432 and/or the outer surfaces 425, 426. The dividers may be configured to allow radial deflection of the inner element 420 as the coupling device 400 is engaged and/or disengaged. In certain embodiments, the dividers may extend at least partially through the inner element 420. A number as well as the length, width, and/or spacing of the dividers may be varied to provide a desired flexibility of the inner element 420 for a specific application.

As illustrated, the outer element 440 comprises a first portion 441 and a second portion 442. Each of the portions 441, 442 has a generally inclined inner surface 447, 448, respectively, having an inner diameter that gradually increases from outer faces 456, 457 of the portions 441, 442 to respective inner faces 458, 459 thereof. In some embodiments, each of the portions 441, 442 may be an annular ring.

As illustrated, the portions 441, 442 may each include one or more apertures 451 formed therein. In some instances, the apertures 451 are formed in a radial array configuration. Each of the apertures 451 may be configured to receive a respective one of the positioning/retaining elements 460 therein. It is understood that more or less apertures 451 than shown may be formed in the portions 441, 442 as desired.

In some embodiments, an inner surface 452 of the apertures 451 may include a plurality of internal features (e.g., threads, teeth, and the like) formed thereon. The internal features may be configured to cooperate with the positioning/retaining element 460 to cause relative movement therebetween and/or relative movement between the inner and outer elements 420, 440 to couple the components 700, 800 together. It should be appreciated that various other means and methods of causing relative movement between the elements 420, 440 and/or the positioning/retaining element 460 may be employed if desired.

In certain embodiments, the portions 441, 442 of the outer element 440 may be configured to engage the inner element 420 by contraction so that the outer element 440 grips the inner element 420 via frictional forces. To achieve this, one or more of the portions 441, 442 of the outer element 440 may comprise one or more segments defined by one or more dividers (e.g., slots, grooves, and the like) formed longitudinally or axially in respective outer surfaces 443, 444 and/or inner surfaces 447, 448 of the portions 441, 442 of the outer element 440. The dividers may be configured to allow radial deflection of the outer element 440 as the coupling device 400 is engaged and/or disengaged. The dividers may extend at least partially through the outer element 440. A number as well as the length, width, and/or spacing of the dividers may be varied to provide a desired flexibility of the outer element 440 for a specific application.

Each of the inner surfaces 447, 448 of the portions 441, 442 of the outer element 440 may be configured to engage the inner element 420. A shape, size, and configuration of the inner surfaces 447, 448 may correspond with the respective outer surfaces 425, 426 of the inner element 420. The outer diameter of the inner element 420 may be slightly smaller than the inner diameter of the outer element 440 to allow for movement of the outer element 440 relative to the inner element 420 during actuation or engagement of the coupling device 400.

In the embodiment depicted in FIG. 7, the inner element 420 and the portions 441, 442 of the outer element 440 have reciprocally inclined outer surfaces 425, 426 and inner surfaces 447, 448, respectively. The inner and outer elements 420, 440 may be configured so that displacement of the outer element 440 relative to the inner element 420 imparts greater radial force than axial force. Accordingly, the forces created by the reciprocally inclined surfaces 425, 426, 447, 448 cause greater radial forces than axial forces. Therefore, an engagement (e.g., a rotation in a first direction) of the positioning/retaining elements 460 causes the inner element 420 to be urged radially inward onto the hub component 700 with sufficient force to impede axial displacement of the inner element 420 relative to the hub component 700 and the hub component 700 to be urged radially inward onto the shaft component 800 with sufficient force to impede axial displacement of the hub component 700 relative to the shaft component 800.

As discussed above, the positioning/retaining elements 460 may be connected to the outer element 420. In certain instances, each of the positioning/retaining elements 460 may include a plurality of external features (e.g., threads, teeth, and the like) formed thereon. The external features of the portioning/retaining 460 may be configured to cooperate with the internal features of the apertures 451 of the outer element 440 to cause relative movement therebetween and/or between the portions 441, 442 of the outer element 440 and the inner element 420.

The coupling device 400 further includes a liner 480 for minimizing friction between the outer surfaces 425, 426 of the inner element 420 and the inner surfaces 447, 448 of the portions 441, 442 of the outer element 440. In some embodiments, the liner 480 may be a single unitary structure or be comprised of a plurality of separate portions. The liner 480 is produced from an anti-friction fabric. In some embodiments, the liner 480 may be directly applied to the inner surfaces 447, 448 of the outer element 440. Additionally, or alternatively, the liner 480 may directly applied to the outer surfaces 425, 426 of the inner element 420. In some embodiments, the liner 480 may be produced from a woven material coated with a reinforcing thermoset resin. The woven material may include PTFE fibers, aramid fiber, carbon fiber, other comparable fibers, and combinations thereof. In some embodiments, the liner 480 may further comprise an additional performance coating comprised of PTFE. In some embodiments, the liner 480 may further include a resin layer for self-lubrication. The resin layer may comprise PTFE. In some embodiments, the liner 480 may be a Fenlon^{™} liner fabric such as Fenlon^{™} Asta, or Fenlon^{™} Low Friction Solid Lubricants.

The various embodiments of the liner 480 described herein are configured to reduce a coefficient of friction (CoF) between the outer surfaces 425, 426 of the inner element 420 and the inner surfaces 447, 448 of the outer element 440 of the coupling device 400. Minimizing a frictional loss between the surfaces 425, 426, 447, 448 results in a generation of increased radial forces. Minimizing the frictional loss results in the coupling device 400 being easier to install, requiring less torque and/or less time. Additionally, the reduction in frictional loss in the coupling device 400 increases a performance thereof.

To engage the coupling device 400 and couple the components 700, 800, the positioning/retaining elements 460 are rotated in the first direction causing relative movement between the positioning/retaining element 460 and the portions 441, 442 of the outer element 420 via cooperation of the external and internal features thereof and applying an axial force on the outer element 420. In some instances, the portions 441, 442 of the outer element 420 are drawn closer together causing a compression of the inner element 420. The reciprocal inclined surfaces 425, 426, 447, 448 of the inner and outer elements 420, 440, respectively, result in an inward radial force. In particular, the portions 441, 442 of the inner element 420 contract to apply a radially inward force on the hub component 700 and the shaft component 800, thereby coupling the components 700, 800 together.

To disengage the coupling device 400 and decouple the components 700, 800, the positioning/retaining elements 460 are rotated in an opposite second direction causing relative movement between the positioning/retaining element 460 and the portions 441, 442 of the outer element 440 via cooperation of the external and internal features thereof and releasing both the axial force on the portions 441, 442 of the outer element 440 and the inward radial force caused by the reciprocal inclined surfaces 425, 426, 447, 448 of the inner and outer elements 420, 440, respectively.

FIG. 8 illustrates a coupling device 500 according to another embodiment of the present disclosure is illustrated. The coupling device 500 may be employed to couple together a plurality components. In some embodiments, the coupling device 500 may be configured to couple stationary components together. For example, the coupling device 500 may be employed to couple a first stationary component (e.g., a working component) to a second stationary component (e.g., mounting structure or component). In other embodiments, the coupling device 500 may be configured to couple movable components so that the components move together. For example, the coupling device 500 may be used to couple rotatable components so that they rotate together. In yet other embodiments, the coupling device 500 may be configured to couple one or more moveable components to one or more stationary components. In the exemplary embodiment shown, the coupling device 500 may be configured to couple a hub component 700 with a shaft component 800. The coupling device 400 may be configured to apply a radial force to the hub component 700 and/or the shaft component 800 coupling the hub component 700 to the shaft component 800.

An exemplary embodiment of the coupling device 500 comprises an inner element 520, an outer element 540, and one or more positioning/retaining elements 560 (e.g., a nut, a bolt, a screw, or any type of mechanical fastener, and the like, etc.). The inner element 520 may be configured to at least partially fit within the outer element 540. The coupling device 500 further comprises a liner 580 disposed between the inner element 520 and the outer element 540. The inner element 520 may comprise a first portion 521 and a second portion 522. As depicted, each of the portions 521, 522 has a generally inclined outer surface 525, 526, respectively, having an outer diameter that gradually increases from outer faces 527, 528 of the portions 521, 522 to respective inner faces 529, 530 thereof. Accordingly, each of the portions 521, 522 of the inner element 520 has a generally frustoconical cross-sectional shape. In some embodiments, each of the portions 521, 522 may be an annular ring.

Inner surfaces 532, 533 of the portions 521, 522, respectively, may be configured to engage the hub component 700. A shape, size, and configuration of the inner surfaces 532, 533 may correspond with an outer surface 701 of the hub component 700. The inner diameters of the portions 521, 522 may be slightly larger than the outer diameter of the hub component 700 to allow for free sliding movement both axially and radially along the hub component 700 prior to actuation or engagement of the coupling device 500.

In certain embodiments, the portions 521, 522 of the inner element 520 may be configured to engage the hub component 700 by contraction so that the portions 521, 522 grip the hub component 700 via frictional forces. To achieve this, at least one of the portions 521, 522 of the inner element 520 may comprise a plurality of segments defined by one or more dividers (e.g., slots) formed axially in the inner surfaces 532, 533 and/or the outer surfaces 525, 526 of the portions 521, 522. The dividers may be configured to allow radial deflection of the inner element 520 as the coupling device 500 is engaged and/or disengaged. In certain embodiments, the dividers may only extend at least partially through one or more of the portions 521, 522 of the inner element 520. A number as well as the length, width, and/or spacing of the dividers may be varied to provide a desired flexibility of the inner element 520 for a specific application.

As illustrated, the outer element 540 comprises a first portion 541 and a second portion 542. Each of the portions 541, 542 has a generally inclined inner surface 547, 548, respectively, having an inner diameter that gradually increases from outer faces 556, 557 of the portions 541, 542 to respective inner faces 558, 559 thereof. In some embodiments, each of the portions 541, 542 may be an annular ring.

As illustrated, the portions 541, 542 may each include one or more apertures 551 formed therein. In some instances, the apertures 551 are formed in a radial array configuration. Each of the apertures 551 may be configured to receive a respective one of the positioning/retaining elements 560 therein. It is understood that more or less apertures 551 than shown may be formed in the portions 541, 542 as desired.

In some embodiments, an inner surface 552 of the apertures 551 may include a plurality of internal features (e.g., threads, teeth, and the like) formed thereon. The internal features may be configured to cooperate with the positioning/retaining element 560 to cause relative movement therebetween and/or relative movement between the inner and outer elements 520, 540 to couple the components 700, 800 together. It should be appreciated that various other means and methods of causing relative movement between the elements 520, 540 and/or the positioning/retaining element 560 may be employed if desired.

In certain embodiments, the portions 541, 542 of the outer element 540 may be configured to engage the inner element 520 by contraction so that the outer element 540 grips the inner element 520 via frictional forces. To achieve this, one or more of the portions 541, 542 of the outer element 540 may comprise one or more segments defined by one or more dividers (e.g., slots, grooves, and the like) formed longitudinally or axially in respective outer surfaces 543, 544 and/or inner surfaces 547, 548 of the portions 541, 542 of the outer element 540. The dividers may be configured to allow radial deflection of the outer element 540 as the coupling device 500 is engaged and/or disengaged. The dividers may extend at least partially through the outer element 540. A number as well as the length, width, and/or spacing of the dividers may be varied to provide a desired flexibility of the outer element 540 for a specific application.

Each of the inner surfaces 547, 548 of the portions 541, 542 of the outer element 540 may be configured to engage the inner element 520. A shape, size, and configuration of the inner surfaces 547, 548 may correspond with the respective outer surfaces 525, 526 of the inner element 520. The outer diameter of the inner element 520 may be slightly smaller than the inner diameter of the outer element 540 to allow for movement of the outer element 540 relative to the inner element 520 during actuation or engagement of the coupling device 500.

In the embodiment depicted in FIG. 8, the inner element 520 and the portions 541, 542 of the outer element 540 have reciprocally inclined outer surfaces 525, 526 and inner surfaces 547, 548, respectively. The inner and outer elements 520, 540 may be configured so that displacement of the outer element 540 relative to the inner element 520 imparts greater radial force than axial force. Accordingly, the forces created by the reciprocally inclined surfaces 525, 526, 547, 548 cause greater radial forces than axial forces. Therefore, an engagement (e.g., a rotation in a first direction) of the positioning/retaining elements 560 causes the inner element 520 to be urged radially inward onto the hub component 700 with sufficient force to impede axial displacement of the inner element 520 relative to the hub component 700 and the hub component 700 to be urged radially inward onto the shaft component 800 with sufficient force to impede axial displacement of the hub component 700 relative to the shaft component 800.

As discussed above, the positioning/retaining elements 560 may be connected to the outer element 520. In certain instances, each of the positioning/retaining elements 560 may include a plurality of external features (e.g., threads, teeth, and the like) formed thereon. The external features of the portioning/retaining 560 may be configured to cooperate with the internal features of the apertures 551 of the outer element 540 to cause relative movement therebetween and/or between the portions 541, 542 of the outer element 540 and the inner element 520.

The coupling device 500 further includes a liner 580 for minimizing friction between the outer surfaces 525, 526 of the inner element 520 and the inner surfaces 547, 548 of the portions 541, 542 of the outer element 540. In some embodiments, the liner 580 may be a single unitary structure or be comprised of a plurality of separate portions. The liner 580 is produced from an anti-friction fabric. In some embodiments, the liner 580 may be directly applied to the inner surfaces 547, 548 of the outer element 540. Additionally, or alternatively, the liner 580 may directly applied to the outer surfaces 525, 526 of the inner element 520. In some embodiments, the liner 580 may be produced from a woven material coated with a reinforcing thermoset resin. The woven material may include PTFE fibers, aramid fiber, carbon fiber, other comparable fibers, and combinations thereof. In some embodiments, the liner 580 may further comprise an additional performance coating comprised of PTFE. In some embodiments, the liner 580 may further include a resin layer for self-lubrication. The resin layer may comprise PTFE. In some embodiments, the liner 580 may be a Fenlon^{™} liner fabric such as Fenlon^{™} Asta, or Fenlon^{™} Low Friction Solid Lubricants.

The various embodiments of the liner 580 described herein are configured to reduce a coefficient of friction (CoF) between the outer surfaces 525, 526 of the inner element 520 and the inner surfaces 547, 548 of the outer element 540 of the coupling device 500. Minimizing a frictional loss between the surfaces 525, 526, 547, 548 results in a generation of increased radial forces. Minimizing the frictional loss results in the coupling device 500 being easier to install, requiring less torque and/or less time. Additionally, the reduction in frictional loss in the coupling device 500 increases a performance thereof.

To engage the coupling device 500 and couple the components 700, 800, the positioning/retaining elements 560 are rotated in the first direction causing relative movement between the positioning/retaining element 560 and the portions 541, 542 of the outer element 520 via cooperation of the external and internal features thereof and applying an axial force on the outer element 520. In some instances, the portions 541, 542 of the outer element 520 are drawn closer together causing a compression of the inner element 520. The reciprocal inclined surfaces 525, 526, 547, 548 of the inner and outer elements 520, 540, respectively, result in an inward radial force. In particular, the portions 541, 542 of the inner element 520 contract to apply a radially inward force on the hub component 700 and the shaft component 800, thereby coupling the components 700, 800 together.

To disengage the coupling device 500 and decouple the components 700, 800, the positioning/retaining elements 560 are rotated in an opposite second direction causing relative movement between the positioning/retaining element 560 and the portions 541, 542 of the outer element 540 via cooperation of the external and internal features thereof and releasing both the axial force on the portions 541, 542 of the outer element 540 and the inward radial force caused by the reciprocal inclined surfaces 525, 526, 547, 548 of the inner and outer elements 520, 540, respectively.

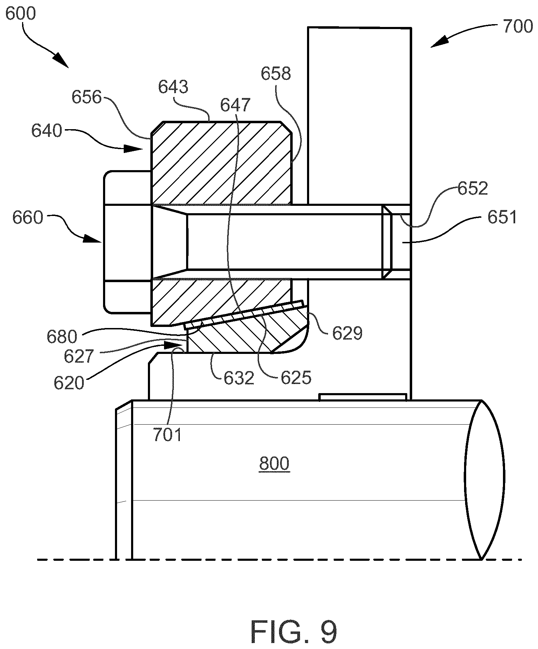

FIG. 9 illustrates a coupling device 600 according to another embodiment of the present disclosure is illustrated. The coupling device 600 may be employed to couple together a plurality components. In some embodiments, the coupling device 600 may be configured to couple stationary components together. For example, the coupling device 600 may be employed to couple a first stationary component (e.g., a working component) to a second stationary component (e.g., mounting structure or component). In other embodiments, the coupling device 600 may be configured to couple movable components so that the components move together. For example, the coupling device 600 may be used to couple rotatable components so that they rotate together. In yet other embodiments, the coupling device 600 may be configured to couple one or more moveable components to one or more stationary components. In the exemplary embodiment shown, the coupling device 600 may be configured to couple a hub component 700 with a shaft component 800. The coupling device 600 may be configured to apply a radial force to the hub component 700 and/or the shaft component 800 coupling the hub component 700 to the shaft component 800.

An exemplary embodiment of the coupling device 600 comprises an inner element 620, an outer element 640, and one or more positioning/retaining elements 660 (e.g., a nut, a bolt, a screw, or any type of mechanical fastener, and the like, etc.). The inner element 620 may be configured to at least partially fit within the outer element 640. The coupling device 600 further comprises a liner 680 disposed between the inner element 620 and the outer element 640. As depicted, the inner element 620 has a generally inclined outer surface 625 having an outer diameter that gradually increases from an outer faces 627 to an inner face 629 thereof. Accordingly, the inner element 620 has a generally frustoconical cross-sectional shape. In some embodiments, the inner element 620 may be an annular ring.

An inner surface 632 of the inner element 620 may be configured to engage the hub component 700. A shape, size, and configuration of the inner surface 632 may correspond with an outer surface 701 of the hub component 700. For example, if the hub component 700 has an irregular outer surface 701 (e.g., inclined or frustoconical), the inner element 620 may have a corresponding irregular inner surface 632 (e.g., inclined or frustoconical). In another example, if the hub component 700 is cylindrical, the inner surface 632 of the inner element 620 may also be cylindrical with an inner diameter corresponding to an outer diameter of the hub component 700. The inner diameter of the inner element 620 may be slightly larger than the outer diameter of the hub component 700 to allow for free sliding movement both axially and radially along the hub component 700 prior to actuation or engagement of the coupling device 600.

In certain embodiments, the inner element 620 may be configured to engage the hub component 700 by contraction so that the inner element 620 grips the hub component 700 via frictional forces. To achieve this, the inner element 620 may comprise a plurality of segments defined by one or more dividers (e.g., slots) formed axially in the inner surface 632 and/or the outer surface 625. The dividers may be configured to allow radial deflection of the inner element 620 as the coupling device 600 is engaged and/or disengaged. In certain embodiments, the dividers may extend at least partially through the inner element 620. A number as well as the length, width, and/or spacing of the dividers may be varied to provide a desired flexibility of the inner element 620 for a specific application.

As illustrated, the outer element 640 has a generally inclined inner surface 647, having an inner diameter that gradually increases from an outer face 656 to an inner face 658 thereof. In some embodiments, the outer element 640 may be an annular ring.

As illustrated, the outer element 640 and/or the hub component 700 may each include one or more apertures 651 formed therein. In some instances, the apertures 651 are formed in a radial array configuration. Each of the apertures 651 may be configured to receive a respective one of the positioning/retaining elements 660 therein. It is understood that more or less apertures 651 than shown may be formed in the outer element and/or the hub component 700 as desired.

In some embodiments, an inner surface 652 of the apertures 651 may include a plurality of internal features (e.g., threads, teeth, and the like) formed thereon. The internal features may be configured to cooperate with the positioning/retaining element 660 to cause relative movement therebetween and/or relative movement between the inner and outer elements 620, 640 to couple the components 700, 800 together. It should be appreciated that various other means and methods of causing relative movement between the elements 620, 640 and/or the positioning/retaining element 660 may be employed if desired.

In certain embodiments, the outer element 640 may be configured to engage the inner element 620 by contraction so that the outer element 640 grips the inner element 620 via frictional forces. To achieve this, the outer element 640 may comprise one or more segments defined by one or more dividers (e.g., slots, grooves, and the like) formed longitudinally or axially in an outer surface 643 and/or an inner surface 647 of the outer element 640. The dividers may be configured to allow radial deflection of the outer element 640 as the coupling device 600 is engaged and/or disengaged. The dividers may extend at least partially through the outer element 640. A number as well as the length, width, and/or spacing of the dividers may be varied to provide a desired flexibility of the outer element 640 for a specific application.

The inner surface 647 of the outer element 640 may be configured to engage the inner element 620. A shape, size, and configuration of the inner surfaces 647 may correspond with the outer surface 625 of the inner element 620. The outer diameter of the inner element 620 may be slightly smaller than the inner diameter of the outer element 640 to allow for movement of the outer element 640 relative to the inner element 620 during actuation or engagement of the coupling device 600.

In the embodiment depicted in FIG. 9, the inner element 620 and the outer element 640 have reciprocally inclined outer surface 625 and inner surface 647, respectively. The inner and outer elements 620, 640 may be configured so that displacement of the outer element 640 relative to the inner element 620 imparts greater radial force than axial force. Accordingly, the forces created by the reciprocally inclined surfaces 625, 647 cause greater radial forces than axial forces. Therefore, an engagement (e.g., a rotation in a first direction) of the positioning/retaining elements 660 causes the inner element 620 to be urged radially inward onto the hub component 700 with sufficient force to impede axial displacement of the inner element 620 relative to the hub component 700 and the hub component 700 to be urged radially inward onto the shaft component 800 with sufficient force to impede axial displacement of the hub component 700 relative to the shaft component 800.

As discussed above, the positioning/retaining elements 660 may be connected to the outer element 620. In certain instances, each of the positioning/retaining elements 660 may include a plurality of external features (e.g., threads, teeth, and the like) formed thereon. The external features of the portioning/retaining 660 may be configured to cooperate with the internal features of the apertures 651 of the outer element 640 and/or the hub component 700 to cause relative movement therebetween and/or between the outer element 640 and the inner element 620.

The coupling device 600 further includes a liner 680 for minimizing friction between the outer surface 625 of the inner element 620 and the inner surface 647 of the outer element 640. In some embodiments, the liner 680 may be a single unitary structure or be comprised of a plurality of separate portions. The liner 680 is produced from an anti-friction fabric. In some embodiments, the liner 680 may be directly applied to the inner surface 647 of the outer element 640. Additionally, or alternatively, the liner 680 may directly applied to the outer surface 625 of the inner element 620. In some embodiments, the liner 680 may be produced from a woven material coated with a reinforcing thermoset resin. The woven material may include PTFE fibers, aramid fiber, carbon fiber, other comparable fibers, and combinations thereof. In some embodiments, the liner 680 may further comprise an additional performance coating comprised of PTFE. In some embodiments, the liner 680 may further include a resin layer for self-lubrication. The resin layer may comprise PTFE. In some embodiments, the liner 680 may be a Fenlon^{™} liner fabric such as Fenlon^{™} Asta, or Fenlon^{™} Low Friction Solid Lubricants.

The various embodiments of the liner 680 described herein are configured to reduce a coefficient of friction (CoF) between the outer surface 625 of the inner element 620 and the inner surface 647 of the outer element 640 of the coupling device 600. Minimizing a frictional loss between the surfaces 625, 647 results in a generation of increased radial forces. Minimizing the frictional loss results in the coupling device 600 being easier to install, requiring less torque and/or less time. Additionally, the reduction in frictional loss in the coupling device 600 increases a performance thereof.

To engage the coupling device 600 and couple the components 700, 800, the positioning/retaining elements 660 are rotated in the first direction causing relative movement between the positioning/retaining element 660 and the outer element 620 and/or the hub component 700 via cooperation of the external and internal features thereof and applying an axial force on the outer element 620. In some instances, the outer element 620 and the hub component 700 drawn closer together causing a compression of the inner element 620. The reciprocal inclined surfaces 625, 647 of the inner and outer elements 620, 640, respectively, result in an inward radial force. In particular, the inner element 620 contracts to apply a radially inward force on the hub component 700 and the shaft component 800, thereby coupling the components 700, 800 together.

To disengage the coupling device 600 and decouple the components 700, 800, the positioning/retaining elements 660 are rotated in an opposite second direction causing relative movement between the positioning/retaining element 660 and the outer element 640 and/or the hub component 700 via cooperation of the external and internal features thereof and releasing both the axial force on the outer element 640 and the inward radial force caused by the reciprocal inclined surfaces 625, 647 of the inner and outer elements 620, 640, respectively.

The coupling devices 100, 200, 300, 400, 500, 600 described herein are an abbreviated list of applicable embodiments. It is understood that the coupling devices 100, 200, 300, 400, 500, 600 may be keyless locking devices. Adventurously, in some embodiment of the present disclosure, the CoF rating of the coupling devices 100, 200, 300, 400, 500, 600 is about 0.02.

The scope of the invention is intended to include any device that utilizes tapered surfaces in combination with a liner comprising an anti-friction fabric as defined in claim 1.

The foregoing description provides embodiments of the invention by way of example only. It is envisioned that other embodiments may perform similar functions and/or achieve similar results.

## Claims

1. A device (100) for coupling components, comprising
a first element (120,140) having at least one inclined surface; and
a second element (120,140) having at least one inclined surface reciprocal to the at least one inclined surface of the first element, wherein an axial movement of at least one of the elements causes a radial force to be applied to at least one of the components, **characterized by** a liner (180) disposed between the at least one inclined surface of the first element and the at least one inclined surface of the second element, wherein the liner is an anti-friction fabric.

2. The device of claim 1, further comprising a positioning/retaining element (160) configured to cooperate with at least one of the first element and the second element.

3. The device of claim 2, wherein the positioning/retaining element is in threaded engagement with at least one of the first element and the second element.

4. The device of claim 2, wherein the positioning/retaining element is coupled to the second element by an interlock connection (152).

5. The device of claim 2, wherein the positioning/retaining element is one of a nut, a bolt, a screw, and a mechanical fastener.

6. The device of claim 2, wherein the positioning/retaining element is at least partially received in one of the components.

7. The device of claim 2, wherein the positioning/retaining element is configured to cause the axial movement of the at least one of the first element and the second element.

8. The device of claim 1, wherein the first element includes a first portion (321) and a second portion (322), wherein at least one of the first portion and the second portion includes the at least one inclined surface.

9. The device of claim 1, wherein the second element includes a first portion and a second portion, wherein at least one of the first portion and the second portion includes the at least one inclined surface.

10. The device of claim 1, wherein at least one of the first element and the second element includes one or more apertures (331) formed therein.

11. The device of claim 1, wherein at least one of the first element and the second element includes one or more dividers formed therein.

12. The device of claim 1, wherein at least one of the first element and the second element is an annular ring.

13. The device of claim 1, wherein a coefficient of friction of the device is about 0.02.

## Patentansprüche

1. Vorrichtung (100) zum Verbinden von Komponenten, umfassend:
ein erstes Element (120, 140) mit mindestens einer Schrägfläche; und
ein zweites Element (120, 140) mit mindestens einer zu der mindestens einen Schrägfläche des ersten Elements reziproken Schrägfläche, wobei eine axiale Bewegung von mindestens einem der Elemente bewirkt, dass eine radiale Kraft auf mindestens eine der Komponenten ausgeübt wird, **gekennzeichnet durch** einen Einsatz (180), der zwischen der mindestens einen Schrägfläche des ersten Elements und der mindestens einen Schrägfläche des zweiten Elements angeordnet ist, wobei der Einsatz ein Gleitgewebe ist.

2. Vorrichtung nach Anspruch 1, ferner umfassend ein Positionierungs-/Halteelement (160), das dazu ausgestaltet ist, mit mindestens einem von dem ersten Element und dem zweiten Element zusammenzuwirken.

3. Vorrichtung nach Anspruch 2, wobei sich das Positionierungs-/Halteelement in einem Gewindeeingriff mit mindestens einem von dem ersten Element und dem zweiten Element befindet.

4. Vorrichtung nach Anspruch 2, wobei das Positionierungs-/Halteelement mit dem zweiten Element durch eine Verriegelungsverbindung (152) verbunden ist.

5. Vorrichtung nach Anspruch 2, wobei das Positionierungs-/Halteelement eines von einer Mutter, einem Bolzen, einer Schraube und einem mechanischen Befestigungselement ist.

6. Vorrichtung nach Anspruch 2, wobei das Positionierungs-/Halteelement zumindest teilweise in einer der Komponenten aufgenommen ist.

7. Vorrichtung nach Anspruch 2, wobei das Positionierungs-/Halteelement derart ausgestaltet ist, dass es die axiale Bewegung des mindestens einen von dem ersten Element und dem zweiten Element bewirkt.

8. Vorrichtung nach Anspruch 1, wobei das erste Element einen ersten Abschnitt (321) und einen zweiten Abschnitt (322) umfasst,
wobei mindestens einer von dem ersten Abschnitt und dem zweiten Abschnitt die mindestens eine Schrägfläche umfasst.

9. Vorrichtung nach Anspruch 1, wobei das zweite Element einen ersten Abschnitt und einen zweiten Abschnitt umfasst, wobei mindestens einer von dem ersten Abschnitt und dem zweiten Abschnitt die mindestens eine Schrägfläche umfasst.

10. Vorrichtung nach Anspruch 1, wobei mindestens eines von dem ersten Element und dem zweiten Element eine oder mehr darin ausgebildete Öffnungen (331) umfasst.

11. Vorrichtung nach Anspruch 1, wobei mindestens eines von dem ersten Element und dem zweiten Element eine oder mehr darin ausgebildete Trennwände umfasst.

12. Vorrichtung nach Anspruch 1, wobei mindestens eines von dem ersten Element und dem zweiten Element ein ringförmiger Ring ist.

13. Vorrichtung nach Anspruch 1, wobei ein Reibungskoeffizient der Vorrichtung ungefähr 0,02 beträgt.

## Revendications

1. Dispositif (100) pour l'accouplement de composants, comprenant :
un premier élément (120, 140) présentant au moins une surface inclinée ; et
un second élément (120, 140) présentant au moins une surface inclinée opposée par rapport à ladite au moins une surface inclinée du premier élément, un mouvement axial d'au moins l'un des éléments provoquant l'application d'une force radiale à au moins l'un des composants, **caractérisé par** un revêtement (180) disposé entre ladite au moins une surface inclinée du premier élément et ladite au moins une surface inclinée du second élément, le revêtement étant un tissu antifrottement.

2. Dispositif selon la revendication 1, comprenant en outre un élément de positionnement/retenue (160) conçu pour coopérer avec au moins un élément parmi le premier élément et le second élément.

3. Dispositif selon la revendication 2, l'élément de positionnement/retenue étant en prise filetée avec au moins un élément parmi le premier élément et le second élément.

4. Dispositif selon la revendication 2, l'élément de positionnement/retenue étant accouplé au second élément par une liaison de verrouillage (152).

5. Dispositif selon la revendication 2, l'élément de positionnement/retenue étant un élément parmi un écrou, un boulon, une vis et une fixation mécanique.

6. Dispositif selon la revendication 2, l'élément de positionnement/retenue étant au moins partiellement logé dans l'un des composants.

7. Dispositif selon la revendication 2, l'élément de positionnement/retenue étant conçu pour provoquer le mouvement axial dudit au moins un élément parmi le premier élément et le second élément.

8. Dispositif selon la revendication 1, le premier élément comprenant une première partie (321) et une seconde partie (322),
au moins une partie parmi la première partie et la seconde partie comprenant ladite au moins une surface inclinée.

9. Dispositif selon la revendication 1, le second élément comprenant une première partie et une seconde partie, au moins une partie parmi la première partie et la seconde partie comprenant ladite au moins une surface inclinée.

10. Dispositif selon la revendication 1, au moins un élément parmi le premier élément et le second élément comprenant un ou plusieurs orifices (331) formé(s) en son sein.

11. Dispositif selon la revendication 1, au moins un élément parmi le premier élément et le second élément comprenant un ou plusieurs séparateurs formé(s) en son sein.

12. Dispositif selon la revendication 1, au moins un élément parmi le premier élément et le second élément étant une bague annulaire.

13. Dispositif selon la revendication 1, un coefficient de frottement du dispositif étant d'environ 0,02.
